**Europäisches Patentamt**

**European Patent Office**

**Office européen des brevets**

(11) Veröffentlichungsnummer: **0 237 624**
**B1**

# EUROPÄISCHE PATENTSCHRIFT

(45) Veröffentlichungstag der Patentschrift:
**19.09.90**

(51) Int. Cl.⁵: **F02M 3/07, F02D 41/22**

(21) Anmeldenummer: **86115526.5**

(22) Anmeldetag: **08.11.86**

(54) **Stellglied zur Steuerung der Durchflussmenge eines Mediums.**

(30) Priorität: **20.03.86 DE 3609438**

(43) Veröffentlichungstag der Anmeldung:
**23.09.87 Patentblatt 87/39**

(45) Bekanntmachung des Hinweises auf die Patenterteilung:
**19.09.90 Patentblatt 90/38**

(84) Benannte Vertragsstaaten:
**DE FR GB IT SE**

(56) Entgegenhaltungen:
**DE-A- 3 006 576**
**DE-A- 3 513 036**
**GB-A- 2 066 930**
**US-A- 4 480 614**

(73) Patentinhaber: **VDO Adolf Schindling AG,**
**Gräfstrasse 103, D-6000 Frankfurt/Main 90(DE)**

(72) Erfinder: **Sausner, Andreas, Tucholskystrasse 26,**
**D-6000 Frankfurt am Main(DE)**
Erfinder: **Göcking, Wolfgang,**
**Ad.-Reichwein-Strasse 105, D-6392 Neu-Anspach(DE)**

(74) Vertreter: **Klein, Thomas, Dipl.-Ing. (FH), Sodener**
**Strasse 9 Postfach 6140, D-6231 Schwalbach a. Ts.(DE)**

## Beschreibung

Die Erfindung betrifft ein Stellglied einer Luftmengensteuerung einer Brennkraftmaschine, mit einem einen Elektromagneten und einen Anker aufweisenden Linearmotor, bei dem der Anker entgegen der Kraft einer Feder bewegbar ist, mit einem ersten Hohlraum dem Luft zugeführt wird und einem zweiten Hohlraum, aus dem Luft abgeleitet wird, mit einem mit dem Anker verbundenen Kolben der den Durchfluß vom ersten zum zweiten Hohlraum steuert.

Bei der elektronischen Regelung der Leerlaufdrehzahl von Brennkraftmaschinen wird die Motordrehzahl im Leerlauf auch unter dem Einfluß von Belastungsänderungen konstant gehalten. Der elektronsiche Regler ermittelt beispielsweise aus den Zündimpulsen die momentane Motordrehzahl, vergleicht diese im Leerlaufbereich mit der vorgegebenen Solldrehzahl und liefert ein pulsbreitenmoduliertes Signal zum Stellglied. Dieses Stellglied beeinflußt die Durchlaufmenge in einem zur Drosselklappe parallel liegenden "Bypass". Entsprechend dem vom Regler abgegebenen Strom (Mittelwert) ändert das Stellglied seinen wirksamen Öffnungsquerschnitt und dosiert die Luftmenge im Sinne einer konstanten Leerlaufdrehzahl des Motors.

Bei einem bekannten Stellglied (GB-A 2 066 930) für die Leerlaufregelung wird ein Kolben mit Hilfe eines Elektromagneten entgegen der Kraft einer Feder derart verstellt, daß er mit zunehmender Auslenkung Durchflußöffnungen in zunehmendem Maße freigibt. Wird jedoch während des Betriebes im Leerlauf der Elektromagnet stromlos, was durch einen Defekt im elektronischen Regler oder an den Leitungsverbindungen erfolgen kann, so wird das Stellglied von der Feder in die geschlossene Stellung gebracht. Es wird somit die geringst mögliche Luftmenge eingestellt, nämlich lediglich die Luftmenge, welche durch den verbleibenden Spalt zwischen der geschlossenen Drosselklappe und dem Ansaugrohr durchgelassen wird. Diese Luftmenge reicht jedoch nicht aus, um den Motor bei verschiedenen Betriebsbedingungen im Leerlauf betreiben zu können.

Wird beispielsweise der Regelbereich der Leerlaufregelung derart ausgelegt, daß bei geringster Belastung des Motors, also bei optimaler Betriebstemperatur und Fehlen zusätzlicher Belastungen wie beispielsweise einer Klimaanlage oder eines automatischen Getriebes, noch eine geringe Leerlaufdrehzahl eingestellt wird, so würde bei dem bekannten Stellglied bei geringerer Betriebstemperatur oder bei eingelegtem Gang (Automatikgetriebe) der Motor im Falle eines Ausfalls der elektronischen Regelung stehenbleiben.

Aufgabe der vorliegenden Erfindung ist es, ein Stellglied anzugeben, welches bei Ausbleiben des Stroms nicht in die Stellung mit dem minimalen Durchfluß gelangt.

Diese Aufgabe wird erfindungsgemäß dadurch gelöst, daß zwischen dem ersten Hohlraum und dem zweiten Hohlraum eine Verengung vorgesehen ist und der Kolben mit der Wand der Verengung einen die Mindestdurchflußmenge gewährleistenden Spalt freiläßt, der Kolben durch den Elektromagneten entgegen der Kraft der Feder in den zweiten Hohlraum bewegbar ist und bei dieser Verstellung den Durchströmquerschnitt zwischen dem ersten und dem zweiten Hohlraum vergrößert, und daß der Kolben im stromlosen Zustand des Linearmotors mittels der Kraft der Feder durch die Verengung hindurch in den ersten Hohlraum bis zu einem Anschlag bewegbar ist und bei der Verstellung bis zu diesem Anschlag den Durchströmquerschnitt zwischen den beiden Hohlräumen geringfügiger vergrößert als bei seiner maximalen Verstellung in den zweiten Hohlraum.

Insbesondere bei der Leerlaufregelung von Brennkraftmaschinen ist eine solche Ausgestaltung vorteilhaft, so daß bei Ausfall der Regelung sich eine Luftmenge einstellt, die bei praktisch allen vorkommenden Betriebsbedingungen eine sinnvolle, wenn auch nicht optimale, Leerlaufdrehzahl ergibt.

Eine besonders günstige Weiterbildung besteht darin, daß der Kolben kreisscheibenförmig ist.

Eine andere Weiterbildung ist dadurch gekennzeichnet, daß die Hohlräume im wesentlichen gleichachsige Hohlzylinder sind, die durch eine Zwischenwand getrennt sind, welche eine Bohrung aufweist. Beide Weiterbildungen ermöglichen weitgehend eine Herstellung eines erfindungsgemäßen Stellgliedes mit den bei bekannten Stellgliedern bewährten Verfahren, Werkstoffen, und Bauteilen.

Schließlich besteht eine Weiterbildung der Erfindung darin, daß der Anschlag ein justierbarer Anschlag für die Ankerstellung im stromlosen Zustand ist.

Die Erfindung läßt zahlreiche Ausführungsformen zu. Eine davon ist schematisch in der Zeichnung an Hand mehrerer Figuren dargestellt und nachfolgend beschrieben. Es zeigt:

Fig. 1 eine vereinfachte Darstellung des Ausführungsbeispiels in mehreren Stellungen und

Fig. 2 ein Diagramm, welches die Abhängigkeit der Durchflußmenge von dem Strom, welche dem Elektromagneten zugeführt wird, darstellt.

Gleiche Teile sind in den Figuren mit gleichen Bezugszeichen versehen.

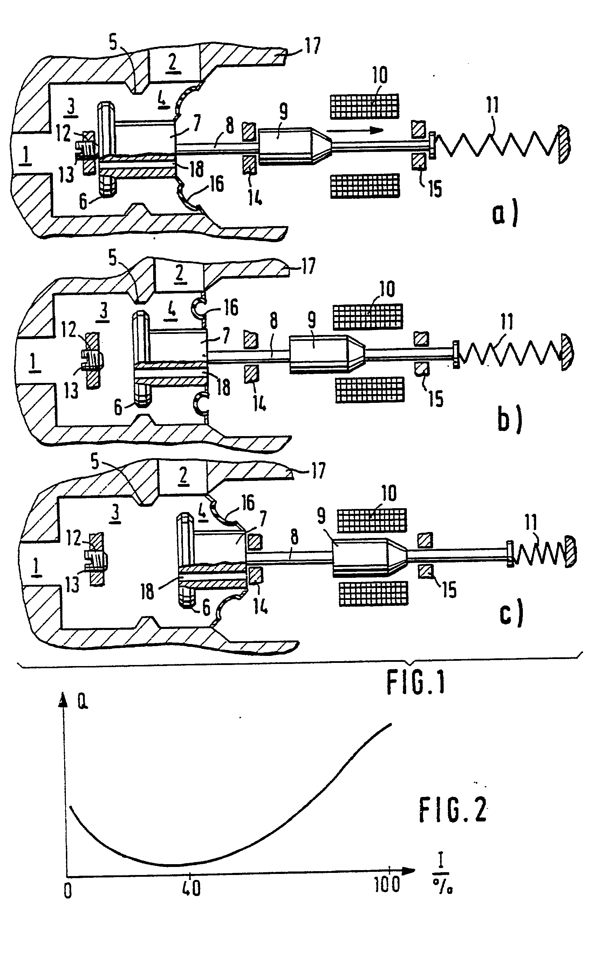

In Fig. 1 ist das Ausführungsbeispiel lediglich soweit dargestellt, wie es zur Erläuterung der Erfindung erforderlich ist. Umlaufende Kanten, welche in einer Schnittdarstellung an sich sichtbar sind, wurden der Übersichtlichkeit halber nicht dargestellt. Dabei ist die Luftzuführung 1 mit dem Ansaugkanal einer Brennkraftmaschine vor der Drosselklappe und die Austrittsöffnung 2 mit dem Ansaugkanal nach der Drosselklappe verbunden. Zwischen den vom Gehäuse 17 gebildeten zylindrischen Hohlräumen 3 und 4 ist eine Verengung 5 vorgesehen, deren Durchmesser etwas größer als der Durchmesser des kreisscheibenförmigen Kolbens 6 ist. Der Kolben 6 weist außerdem ein zylinderförmiges Teil 7 auf und ist auf einer Kolbenstange 8 angeordnet, welche außerdem einen Anker 9 trägt, welcher mit Hilfe eines Elektromagneten 10 in Pfeilrichtung entgegen der Kraft einer Schraubenfeder 11 bewegbar ist.

Im stromlosen Zustand drückt die Schraubenfeder 11 den Kolben 6 gegen einen Anschlag 12, welcher mit Hilfe einer Schraube 13 justierbar ausgebildet ist. Führungselemente 14, 15 für die Kolbenstange sind lediglich schematisch angedeutet.

Bei dem dargestellten Stellglied ist eine Membran 16 zwischen dem zylindrischen Kolbenteil 7 und dem Gehäuse 17 vorgesehen, welche den zweiten Hohlraum 4 abschließt. Da in dem ersten Hohlraum 3 ein höherer Druck als in dem zweiten Hohlraum 4 herrscht, wobei die Differenz unter anderem von der Stellung des Kolbens 6 abhängt, ist in an sich bekannter Weise mindestens eine Bohrung 18 im Kolben und im zylindrischen Kolbenteil 7 vorgesehen, durch welche ein Druckausgleich zwischen dem ersten Hohlraum 3 und dem an die Membran 16 angrenzenden Hohlraum stattfindet. Dadurch wird die von der Druckdifferenz auf den Kolben 6 wirkende Kraft kompensiert, so daß die Stellung des Kolbens 6 lediglich durch die Federkonstante und den elektrischen Strom bestimmt wird.

Fig. 1a) zeigt das Stellglied im stromlosen Zustand. Abgesehen davon, daß diese Stellung eingenommen wird, wenn der Motor abgestellt wird, ist dieses die Stellung für den Fall, daß das elektronische Regelsystem einen Fehler aufweist, welcher mit Hilfe eines Prüfsystems erkannt wird. Der dem Stellglied zugeführte Strom I wird dann abgeschaltet, so daß die Feder 11 den Kolben 6 gegen den Anschlag 12 drückt und somit der Strömungsquerschnitt größer als der Minimalwert ist, welcher entsteht, wenn sich der Kolben 6 in einer Ebene mit der Verengung 5 befindet. Mit Hilfe der Schraube 13 kann die Lage des Kolbens derart justiert werden, daß der Motor eine mittlere Leerlaufdrehzahl einnimmt, so daß er für die meisten vorkommenden Betriebsbedingungen auch bei Ausfall der elektronischen Regelung weder stehenbleibt noch eine sehr hohe Leerlaufdrehzahl annimmt.

In Fig. 1b) ist eine Stellung des Kolbens dargestellt, welche den Mindestdurchfluß zur Folge hat. Bei weiterer Erhöhung des Stroms I durch die Spule 10 wird der Kolben nach rechts bewegt, wie es in Fig. 1c) dargestellt ist, wodurch der freie Querschnitt zwischen dem Kolben 6 und der Verengung 5 in zunehmenden Maße vergrößert wird. In diesem Auslenkungsbereich befindet sich der Arbeitsbereich des Stellgliedes für die elektronische Regelung.

Fig 2 stellt die Funktion der Luftmenge Q in Abhängigkeit des Stroms I dar. Im stromlosen Zustand stellt sich eine mittlere Luftmenge ein. Das Minimum der Kurve liegt bei einem praktisch ausgeführten erfindungsgemäßen Stellglied etwas unterhalb von 40 %, wonach die Kurve bis zu 100 % des vorgesehenen Stromes ansteigt. Der Arbeitsbereich für die elektronische Regelung erstreckt sich daher über einen Strombereich von 40 bis 100 %.

## Patentansprüche

1. Stellglied einer Luftmengensteuerung einer Brennkraftmaschine, mit einem einen Elektromagneten (10) und einen Anker (9) aufweisenden Linearmotor, bei dem der Anker (9) entgegen der Kraft einer Feder (11) bewegbar ist, mit einem ersten Hohlraum (3) dem Luft zugeführt wird und einem zweiten Hohlraum (4) aus dem Luft abgeleitet wird, mit einem mit dem Anker (9) verbundenen Kolben (6) der den Durchfluß vom ersten zum zweiten Hohlraum steuert, dadurch gekennzeichnet, daß zwischen dem ersten Hohlraum (3) und dem zweiten Hohlraum (4) eine Verengung (5) vorgesehen ist und der Kolben (6) mit der Wand der Verengung (5) einen die Mindestdurchflußmenge gewährleistenden Spalt freiläßt, der Kolben (6) durch den Elektromagneten (10) entgegen der Kraft der Feder (11) in den zweiten Hohlraum (4) bewegbar ist und bei dieser Verstellung den Durchströmquerschnitt zwischen dem ersten und dem zweiten Hohlraum vergrößert, und daß der Kolben (6) im stromlosen Zustand des Linearmotors mittels der Kraft der Feder (11) durch die Verengung hindurch in den ersten Hohlraum (3) bis zu einem Anschlag (12) bewegbar ist und bei der Verstellung bis zu diesem Anschlag (12) den Durchströmquerschnitt zwischen den beiden Hohlräumen geringfügiger vergrößert als bei seiner maximalen Verstellung in den zweiten Hohlraum (4).

2. Stellglied nach Anspruch 1, dadurch gekennzeichnet, daß der Kolben (6) kreisscheibenförmig ist.

3. Stellglied nach Anspruch 2, dadurch gekennzeichnet, daß die Hohlräume (3, 4) im wesentlichen gleichachsige Hohlzylinder sind, die durch eine Zwischenwand (5) getrennt sind, welche eine Bohrung aufweist.

4. Stellglied nach einem der vorhergehenden Ansprüche, dadurch gekennzeichnet, daß der Anschlag ein justierbarer Anschlag (12, 13) für die Ankerstellung im stromlosen Zustand ist.

## Claims

1. Actuator for controlling the air flow rate of an internal combustion engine, with a linear motor having an electromagnet (10) and an armature (9), in which motor the armature (9) can be moved against the force of a spring (11), with a first cavity (3) to which air is supplied and a second cavity (4) from which air is taken off, with a piston (6) connected to the armature (9), which piston controls the flow from the first cavity to the second, characterised in that a throat (5) is provided between the first cavity (3) and the second cavity (4) and the piston (6) leaves a gap with the wall of the throat (5) ensuring the minimum rate of flow, the piston (6) can be moved by the electromagnet (10) against the force of the spring (11) into the second cavity (4) and thus displaced it enlarges the flow cross-section between the first cavity and the second, and that when the linear motor is in the no-load condition the piston (6) can be moved by the force of the spring (11) right through the throat and into the first cavity (3) as far as a stop (12), and when the piston (6) is displaced so that it abuts this stop (12) it enlarges the flow cross-section between the two cavities to a lesser degree than it does when displaced to its maximum into the second cavity (4).

2. Actuator according to claim 1, characterised in that the piston (6) has the shape of a circular disc.

3. Actuator according to claim 2, characterised in that the cavities (3, 4) are essentially hollow cylinders with identical axes, separated by a partition (5) which incorporates a bore.

4. Actuator according to one of the preceding claims, characterised in that the stop is an adjustable stop (12, 13) for positioning the armature in the no-load condition.

**Revendications**

1. Organe de positionnement d'un dispositif de commande de débit d'air d'un moteur à combustion interne, comportant un moteur linéaire qui présente un électro-aimant (10) et un induit (9) et dans le cas duquel l'induit (9) peut se déplacer à l'encontre de la force d'un ressort (11), ce dispositif comportant aussi un premier espace creux (3) auquel l'air est amené et un second espace creux (4) hors duquel l'air est évacué, et comportant aussi un piston (6) qui est lié à l'induit (9) et qui commande le débit de passage (d'air) entre le premier et le second espace creux, organe caractérisé par le fait qu'entre le premier espace creux (3) et le second espace creux (4) est prévu un rétrécissement (5) et que le piston (6), avec la paroi du rétrécissement (5), libère une fente garantissant le débit minimal ; par le fait que le piston (6) peut se déplacer dans le second espace creux sous l'action de l'électro-aimant (10) et à l'encontre de la force du ressort (11) et, qu'au cours de ce déplacement, il augmente la section de passage (d'air) entre le premier et le second espace creux; et par le fait que lorsque le moteur linéaire est sans courant électrique, le piston (6) peut se déplacer, sous l'action de la force du ressort (11), passer à travers le rétrécissement, venir dans le premier espace creux (3) jusqu'à une butée (12) et, au cours de ce déplacement jusqu'à cette butée (12), il augmente la section de passage d'air entre les deux espaces creux plus faiblement qu'au cours de son déplacement maximal dans le second espace creux (4).

2. Organe de positionnement selon la revendication 1, caractérisé par le fait que le piston (6) a la forme d'un disque circulaire.

3. Organe de positionnement selon la revendication 2, caractérisé par le fait que les espaces creux (3, 4) sont des cylindres creux essentiellement coaxiaux, qui sont séparés par une paroi intermédiaire (5) présentant un perçage.

4. Organe de positionnement selon l'une des revendications précédentes, caractérisé par le fait que la butée est une butée (12, 13) réglable pour fixer la position de l'induit en l'absence du courant électrique.

a )

b )

c )

FIG.1

FIG.2